# EUROPÄISCHE PATENTSCHRIFT

(11) **EP 0 418 721 B1**
(45) Veröffentlichungstag und Bekanntmachung des Hinweises auf die Patenterteilung: **01.12.1993**
(21) Anmeldenummer: 90117566.1
(22) Anmeldetag: 12.09.1990
(51) Int. Cl.: C08F 226/10, C08F 218/04

(54) **Verfahren zur Herstellung von in Wasser klaren Copolymerisaten**
Process of preparation of copolymers clear in water
Procédé de préparation de copolymères clairs dans l'eau

(30) Priorität: 22.09.1989 DE 3931681
(43) Veröffentlichungstag der Anmeldung: 27.03.1991
(73) Patentinhaber: BASF Aktiengesellschaft, 67063 Ludwigshafen (DE)
(72) Erfinder: Potthoff-Karl, Birgit, Dr., D-6940 Weinheim (DE); Nuber, Adolf, Dr., D-6737 Boehl-Iggelheim (DE); Hinz, Willy, Dr., D-6800 Mannheim 1 (DE); Sanner, Axel, Dr., D-6710 Frankenthal (DE)

(56) Entgegenhaltungen:
- EP-A- 0 104 042
- CHEMICAL ABSTRACTS, Band 110, Nr. 9, 1. Mai 1989, Seite 10, Zusammenfassung Nr. 155036e, Columbus, Ohio, US; & PL-A-142 565 (INSTYTUT CHEMII PRZEMYSLOWEJ) 29-02-1988

## Beschreibung

Die vorliegende Erfindung betrifft ein verbessertes Verfahren zur Herstellung von in Wasser klaren Copolymerisaten aus
A) 45 bis 90 Gew.-% N-Vinylpyrrolidon,
B) 10 bis 55 Gew.-% eines Vinylesters und
C) 0 bis 10 Gew.-% weiterer copolymerisierbarer Monomerer

durch radikalische Polymerisation in einem organischen Lösungsmittel in Gegenwart eines Radikalinitiators und destillative Abtrennung des organischen Lösungsmittels und sonstiger flüchtiger Bestandteile.

Die EP-A-104 042 betrifft die Herstellung von N-Vinylpyrrolidon/Vinylacetat-Copolymerisaten durch radikalische Polymerisation. Hierbei wird empfohlen, nach erfolgter Polymerisation den als Lösungsmittel eingesetzten Alkohol abzudestillieren und gleichzeitig Wasser zuzufügen.

Die nach der Methode der EP-A-104 042 erhältlichen und hauptsächlich in der Haarkosmetik eingesetzten N-Vinylpyrrolidon/Vinylacetat-Copolymerisate haben jedoch den Nachteil, in Wasser nur trübe Lösungen zu ergeben. Klare Lösungen werden nur in Gegenwart von beispielsweise Alkoholen erhalten. Aufgabe der vorliegenden Erfindung war es daher, ein Verfahren bereitzustellen, welches in Wasser klare Copolymerisate aus den genannten Monomeren liefert.

Demgemäß wurde ein Verfahren zur Herstellung von in Wasser klaren Copolymerisaten aus
A) 45 bis 90 Gew.-% N-Vinylpyrrolidon,
B) 10 bis 55 Gew.-% eines Vinylesters und
C) 0 bis 10 Gew.-% weiterer copolymerisierbarer Monomerer

durch radikalische Polymerisation in einem organischen Lösungsmittel in Gegenwart eines Radikalinitiators und destillative Abtrennung des organischen Lösungsmittels und sonstiger Bestandteile gefunden, welches dadurch gekennzeichnet ist, daß man die Polymerisation bis zu einem Gehalt des Reaktionsgemisches an N-Vinylpyrrolidon, der 5 bis 1 Gew.-% der eingesetzten Menge an N-Vinylpyrrolidon entspricht, führt, das organische Lösungsmittel sowie sonstige flüchtige Bestandteile weitgehend destillativ abtrennt, das Gemisch mit Wasser versetzt, unter erneuter Zugabe von Radikalinitiator die wäßrige Lösung 1 bis 10 Stunden bei 50 bis 100°C beläßt und danach flüchtige organische Bestandteile durch eine Wasserdampfdestillation praktisch vollständig entfernt.

Das erfindungsgemäße Verfahren ist für die Herstellung von Copolymerisaten aus
A) 50 bis 80 Gew.-% N-Vinylpyrrolidon,
B) 20 bis 50 Gew.-% eines Vinylesters und
C) 0 bis 5 Gew.-% weiterer copolymerisierbarer Monomerer

besonders gut geeignet.

Als Vinylester B eignen sich insbesondere solche mit 4 bis 8 C-Atomen, beispielsweise Vinylpropionat, Vinylbutyrat, Vinylvalerat und in ganz besonderem Maße Vinylacetat.

Als weitere copolymerisierbare Monomere C, mit welchen die Eigenschaften des Copolymerisates modifiziert werden können, dienen beispielsweise Acryl- oder Methacrylsäure, ihre Methyl-, Ethyl-, n-Propyl-, n-Butyl- oder tert.-Butylester, Styrol, Vinylchlorid, Vinylidenchlorid, Acrylnitril, Methacrylnitril, Acrylamid oder Methacrylamid. Bei Vorliegen von Carboxylgruppen in den Copolymerisaten werden diese zweckmäßigerweise teilweise oder vollständig durch Amine, beispielsweise 2-Amino-2-methylpropanol, Triisopropanolamin oder 2-Amino-2-ethylpropan-1,3-diol, neutralisiert.

Die Copolymerisate sollen K-Werte von 10 bis 50, vorzugsweise 20 bis 30 aufweisen. Der jeweils gewünschte K-Wert läßt sich in an sich bekannter Weise durch Wahl der Polymerisationsbedingungen, beispielsweise der Polymerisationsdauer und der Initiatorkonzentration, einstellen. Die K-Werte werden in Analogie zu Fikentscher, Cellulosechemie, Bd. 13, S. 58 bis 64 (1932) bei 25°C in 1 gew.-%iger wäßriger Lösung gemessen und stellen ein Maß für das Molgewicht dar.

Derartige Copolymerisate haben üblicherweise Glasübergangstemperaturen zwischen 50 und 150°C, insbesondere zwischen 80 und 130°C.

Als organisches Lösungsmittel dienen vor allem Alkanole mit 1 bis 4 C-Atomen wie Methanol, Ethanol, n-Propanol, n-Butanol und insbesondere Isopropanol und sec.-Butanol, daneben aber auch beispielsweise Aceton, Tetrahydrofuran oder Dioxan.

Die Durchführung der Polymerisationsreaktion im organischen Lösungsmittel erfolgt üblicherweise bei Temperaturen von 60 bis 130°C, wobei die Umsetzung bei Normaldruck, unter Eigendruck oder unter Schutzgas-Überdruck durchgeführt werden kann. Als Schutzgas eignet sich beispielsweise Stickstoff.

Man führt die Polymerisation bis zu einem Gehalt des Reaktionsgemisches an N-Vinylpyrrolidon, der 5 bis 1 Gew.-%, vorzugsweise 3 bis 1 Gew.-% der eingesetzten Menge an N-Vinylpyrrolidon entspricht, wobei die Menge des N-Vinylpyrrolidons im Reaktionsgemisch in einfacher Weise, beispielsweise durch eine gaschromatographische Bestimmung oder durch Iodtitration, ermittelt werden kann.

Es erweist sich als vorteilhaft, wenn man den Zugabemodus der Monomeren in das Reaktionsgefäß so wählt, daß die Gesamtmenge der Komponente B vor dem Ende der Zugabe der Komponente A in das Reaktionsgefäß eingebracht worden ist. Durch das teilweise Verdampfen des in das Reaktionsgemisch eingebrachten niedrigsiedenden Vinylesters und die Kondensation des Monomeren an den kälteren Innenwänden des Reaktionsgefäßes gelangt der Vinylester B nämlich mit einer gewissen zeitlichen Verzögerung an den Ort der Polymerisation und es empfiehlt sich deshalb, dies durch die schnellere Zugabe der Komponente B auszugleichen.

Als Radikalinitiatoren eignen sich in der Regel solche mit einer Halbwertszerfallszeit von 10 Stunden bei Temperaturen von 40°C bis ca. 130°C, insbesondere 50 bis 80°C. Beispiele für geeignete Radikalinitiatoren sind Dimethyl-2,2'-azobisisobutyrat, Dilauroylperoxid, Dibenzoylperoxid, Dicumylperoxid, Di-tert.-butylperoxid, Wasserstoffperoxid und insbesondere Percarbonester wie tert.-Butylperneodecanoat, tert.-Amylperpivalat, tert.-Butylperpivalat, tert.-Butylperoxy-2-ethylhexanoat und tert.-Butylperbenzoat.

Während der Polymerisationsreaktion wird der Radikalinitiator vorteilhafterweise kontinuierlich zugegeben, um ständig eine in etwa konstante Initiatorkonzentration in der Lösung zu gewährleisten.

Im Anschluß an die Polymerisation im organischen Lösungsmittel trennt man das organische Lösungsmittel sowie sonstige flüchtige Bestandteile weitgehend destillativ ab, beispielsweise durch Destillation unter Normaldruck oder bei vermindertem Druck oder durch Wasserdampfdestillation, wobei die Verwendung von überhitztem Wasserdampf besonders vorteilhaft ist. Das abdestillierte organische Lösungsmittel wird durch Wasser ersetzt. Als sonstige flüchtige Bestandteile sind beispielsweise nicht umgesetzter Vinylester, Phlegmatisierungsmittel aus den handelsüblichen Radikalinitiatorzubereitungen und Zerfallsprodukte der Initiatoren zu nennen.

Noch vorhandene Monomere in der so erhaltenen wäßrigen Mischung läßt man unter erneuter, vorteilhafterweise kontinuierlicher Zugabe von Radikalinitiator bis zu einem Gehalt des Reaktionsgemisches an N-Vinylpyrrolidon, der üblicherweise maximal 0,1 Gew.-% der eingesetzten Menge an N-Vinylpyrrolidon entspricht, abreagieren, indem man die wäßrige Lösung 1 bis 10 Stunden, vorzugsweise 3 bis 6 Stunden, bei 50 bis 100°C, vorzugsweise 60 bis 90°C, beläßt. Hierzu verwendet man üblicherweise die gleichen Initiatoren wie zuvor.

Danach werden vorhandenes organisches Lösungsmittel und sonstige flüchtige Bestandteile durch eine Wasserdampfdestillation praktisch vollständig entfernt, wobei die Verwendung von überhitztem Wasserdampf besonders vorteilhaft ist.

Mit dem erfindungsgemäßen Verfahren erhält man klare wäßrige Copolymerisat-Lösungen, die normalerweise nur noch Spuren an organischem Lösungsmittel enthalten. Diese Lösungen mit einem Feststoffgehalt von üblicherweise 30 bis 60 Gew.-% können direkt für die weitere Verwendung, beispielsweise in der Haarkosmetik, eingesetzt werden.

Die nach dem erfindungsgemäßen Verfahren hergestellten Copolymerisate zeichnen sich vor allem dadurch aus, daß sie mit Wasser klare Lösungen bilden, da sie deutlich weniger Verunreinigungen als die gleichen nach dem Stand der Technik hergestellten Copolymerisate enthalten und somit auch keinen störenden Eigengeruch aufweisen. Dies ist von besonderer Bedeutung beim Einsatz in Haarbehandlungsmitteln wie Haarfestigern oder Haargelen. Die diese Copolymerisate enthaltenden Haarkosmetika sind somit gesundheitlich unbedenklicher und besser verträglich als vergleichbare Mittel des Standes der Technik.

### Beispiele

Die Trübung der wäßrigen Copolymerisat-Lösungen wurde durch nephelometrische Trübungsmessung bestimmt. Bei dieser Meßmethode wird photometrisch die Streuung von Licht nach Durchstrahlen der Meßlösung ermittelt, wobei diese Streuung durch die Wechselwirkung zwischen den Lichtstrahlen und den Partikeln oder Tröpfchen in der Lösung, deren Anzahl und Größe den Grad der Trübung ausmachen, bestimmt wird. Als Meßgröße dient die nephelometrische Trübungseinheit (NTU), welche bei 25°C und in 10 gew.-%iger wäßriger Lösung gemessen und durch Eichung auf der Basis von Formazin als künstlichem Trübungsmittel festgelegt wird. Je höher der NTU-Wert, desto trüber ist die Lösung.

Die Restgehalte an N-Vinylpyrrolidon und Isopropanol in den Lösungen wurden durch gaschromatographische Analyse bestimmt.

Die K-Werte wurden in 1,0 gew.-%iger wäßriger Lösung bei 25°C gemessen.

### Beispiel 1

Copolymerisat aus 61 Gew.-% N-Vinylpyrrolidon und 39 Gew.-% Vinylacetat

Eine Lösung von 25,2 g N-Vinylpyrrolidon, 18,9 g Vinylacetat und 0,2 g tert.-Butylperpivalat (75 gew.-%ig) in 88 g Isopropanol wurde mit 0,3 bar Stickstoff unter Überdruck gesetzt und auf 70°C erwärmt. Nach dem Anspringen der Polymerisation, erkennbar an einer Viskositätserhöhung, wurden bei dieser Temperatur innerhalb von 4 Stunden gleichzeitig eine Mischung aus 225,8 g N-Vinylpyrrolidon, 169,8 g Vinylacetat und 314 g Isopropanol und eine Lösung von 2,4 g tert.-Butylperpivalat (75 gew.-%ig) in 24 g Isopropanol zugegeben. Anschließend wurden bei 70°C innerhalb von 1 Stunde gleichzeitig eine Mischung aus 44 g N-Vinylpyrrolidon und 37 g Isopropanol und eine Lösung von 0,6 g tert.-Butylperpivalat (75 gew.-%ig) in 6 g Isopropanol zugegeben. Danach wurde 1 Stunde bei 78°C nachgerührt. Die Reaktionslösung wies hiernach einen N-Vinylpyrrolidon-Gehalt von 5,1 g, entsprechend 1,7 Gew.-% der eingesetzten Menge an N-Vinylpyrrolidon, auf.

Anschließend wurden Isopropanol und flüchtige Bestandteile mit überhitztem Wasserdampf von 140°C und 1,3 bar abdestilliert, bis der Restgehalt der resultierenden wäßrigen Lösung an Isopropanol 1 Gew.-% betrug. Der Feststoffgehalt der Lösung lag bei 51,4 Gew.-%. Das Copolymerisat hatte einen K-Wert von 24,9 (1 gew.-%ig in Wasser, gemessen bei 25°C). Das Produkt wies einen NTU-Wert von 3,9 auf.

Die so erhaltene wäßrige Copolymerisat-Lösung wurde auf 80°C erwärmt und innerhalb von 4 Stunden mit 1,3 g tert.-Butylperpivalat (75 gew.-%ig), gelöst in 50 g Isopropanol, versetzt. Anschließend wurden 0,5 Stunden bei der gleichen Temperatur nachgerührt. Die Reaktionslösung wies hiernach einen N-Vinylpyrrolidon-Gehalt von 0,15 g, entsprechend 0,05 Gew.-% der eingesetzten Menge an N-Vinylpyrrolidon, auf.

Danach wurden wiederum Isopropanol und flüchtige Bestandteile mit überhitztem Wasserdampf von 140°C und 1,3 bar abdestilliert, bis der Restgehalt der Lösung an Isopropanol 0,3 Gew.-% betrug. Der Feststoffgehalt der Lösung lag bei 50,7 Gew.-%. Das Produkt hatte einen K-Wert von 25,8 (1 gew.-%ig in Wasser, gemessen bei 25°C) und einen NTU-Wert von 1,0.

Wurde bei der Weiterführung der Umsetzung in wäßrigem Medium anstelle von tert.-Butylperpivalat (75 gew.-%ig) mit der gleichen Menge an tert.-Butylperoxy-2-ethylhexanoat bei 90°C analog gearbeitet, erzielte man ein Produkt mit einem NTU-Wert von 2,9.

### Beispiel 2

Copolymerisat aus 70 Gew.-% N-Vinylpyrrolidon und 30 Gew.-% Vinylacetat

Eine Lösung von 20,8 g N-Vinylpyrrolidon, 9,9 g Vinylacetat und 0,12 g tert.-Butylperpivalat (75 gew.-%ig) in 40 g Isopropanol wurde mit 0,3 bar Stickstoff unter Überdruck gesetzt und auf 70°C erwärmt. Analog zu Beispiel 1 wurden nach dem Anspringen der Polymerisation gleichzeitig eine Mischung aus 187 g N-Vinylpyrrolidon, 90 g Vinylacetat und 225 g Isopropanol und eine Lösung von 1,7 g tert.-Butylperpivalat (75 gew.-%ig) in 24 g Isopropanol zugegeben und danach gleichzeitig eine Mischung aus 23 g N-Vinylpyrrolidon und 33 g Isopropanol und eine Lösung von 0,4 g tert.-Butylperpivalat (75 gew.-%ig) in 6 g Isopropanol zugetropft. Anschließend wurde 1 Stunde bei 78°C nachgerührt. Die Reaktionslösung wies hiernach einen N-Vinylpyrrolidon-Gehalt von 3,7 g, entsprechend 1,6 Gew.-% der eingesetzten Menge an N-Vinylpyrrolidon, auf.

Analog zu Beispiel 1 wurde eine Destillation mit überhitztem Wasserdampf durchgeführt. Danach wurde die Umsetzung analog durch Zugabe von 0,9 g tert.-Butylperpivalat (75 gew.-%ig), gelöst in 50 g Isopropanol, in wäßrigem Medium weitergeführt, bis die Reaktionslösung einen N-Vinylpyrrolidon-Gehalt von 0,21 g, entsprechend 0,09 Gew.-% der eingesetzten Menge an N-Vinylpyrrolidon, aufwies, und erneut mit überhitztem Wasserdampf destilliert.

Der Feststoffgehalt der erhaltenen Lösung lag bei 49,5 Gew.-%. Das Copolymerisat hatte einen K-Wert von 24,3 (1 gew.-%ig in Wasser, gemessen bei 25°C). Das Produkt wies einen NTU-Wert von 1,5 auf.

### Beispiel 3

Copolymerisat aus 50 Gew.-% N-Vinylpyrrolidon und 50 Gew.-% Vinylacetat

Eine Lösung von 20 g N-Vinylpyrrolidon, 24 g Vinylacetat und 0,2 g tert.-Butylperpivalat (75 gew.-%ig) in 69 g Isopropanol wurde mit 0,3 bar Stickstoff unter Überdruck gesetzt und auf 70°C erwärmt. Analog zu Beispiel 1 wurden nach dem Anspringen der Polymerisation gleichzeitig eine Mischung aus 180 g N-Vinylpyrrolidon, 220 g Vinylacetat und 360 g Isopropanol und eine Lösung von 2,4 g tert.-Butylperpivalat (75 gew.-%ig) in 24 g Isopropanol zugegeben und danach gleichzeitig eine Mischung aus 44 g N-Vinylpyrrolidon und 37 g Isopropanol und eine Lösung von 0,6 g tert.-Butylperpivalat (75 gew.-%ig) in 6 g Isopropanol zugetropft. Anschließend wurde 1 Stunde bei 78°C nachgerührt. Die Reaktionslösung wies hiernach einen N-Vinylpyrrolidon-Gehalt von 6,3 g, entsprechend 2,6 Gew.-% der eingesetzten Menge an N-Vinylpyrrolidon, auf.

Analog zu Beispiel 1 wurde eine Destillation mit überhitztem Wasserdampf durchgeführt. Danach wurde die Umsetzung analog durch Zugabe von 1,3 g tert.-Butylperpivalat (75 gew.-%ig), gelöst in 50 g Isopropanol, in wäßrigem Medium weitergeführt, bis die Reaktionslösung einen N-Vinylpyrrolidon-Gehalt von 0,24 g, entsprechend 0,10 Gew.-% der eingesetzten Menge an N-Vinylpyrrolidon, aufwies, und erneut mit überhitztem Wasserdampf destilliert.

Der Feststoffgehalt der erhaltenen Lösung lag bei 53,1 Gew.-%. Das Copolymerisat hatte einen K-Wert von 21,8 (1 gew.-%ig in Wasser, gemessen bei 25°C). Das Produkt wies einen NTU-Wert von 1,8 auf.

### Vergleichsbeispiel

Copolymerisat aus 60 Gew.-% N-Vinylpyrrolidon und 40 Gew.-% Vinylacetat

Gemäß Beispiel 8 der EP-B 104 042 wurden 125 g N-Vinylpyrrolidon mit 100 g Vinylacetat in 250 g Isopropanol zu einem Copolymerisat mit einem K-Wert von 26,1 (1 gew.-%ig in Wasser, gemessen bei 25°C) polymerisiert. Mit der erhaltenen Lösung wurde analog zu Beispiel 1 eine Wasserdampfdestillation durchgeführt. Die so erhaltene wäßrige Copolymerisat-Lösung wies einen NTU-Wert von 121 auf.

## Patentansprüche

1. Verfahren zur Herstellung von in Wasser klaren Copolymerisaten aus
A) 45 bis 90 Gew.-% N-Vinylpyrrolidon,
B) 10 bis 55 Gew.-% eines Vinylesters und
C) 0 bis 10 Gew.-% weiterer copolymerisierbarer Monomerer
durch radikalische Polymerisation in einem organischen Lösungsmittel in Gegenwart eines Radikalinitiators und destillative Abtrennung des organischen Lösungsmittels und sonstiger flüchtiger Bestandteile, dadurch gekennzeichnet, daß man die Polymerisation bis zu einem Gehalt des Reaktionsgemisches an N-Vinylpyrrolidon, der 5 bis 1 Gew.-% der eingesetzten Menge an N-Vinylpyrrolidon entspricht, führt, das organische Lösungsmittel sowie sonstige flüchtige Bestandteile weitgehend destillativ abtrennt, das Gemisch mit Wasser versetzt, unter erneuter Zugabe von Radikalinitiator die wäßrige Lösung 1 bis 10 Stunden bei 50 bis 100°C beläßt und danach flüchtige organische Bestandteile durch eine Wasserdampfdestillation praktisch vollständig entfernt.

2. Verfahren zur Herstellung von in Wasser klaren Copolymerisaten nach Anspruch 1, dadurch gekennzeichnet, daß man den Radikalinitiator während der Umsetzung kontinuierlich zugibt.

3. Verfahren zur Herstellung von in Wasser klaren Copolymerisaten nach Anspruch 1 oder 2, dadurch gekennzeichnet, daß man als organisches Lösungsmittel ein Alkanol mit 1 bis 4 C-Atomen verwendet.

4. Verfahren nach den Ansprüchen 1 bis 3, dadurch gekennzeichnet, daß man es zur Herstellung von Copolymerisaten verwendet, bei denen als Komponente B Vinylacetat eingesetzt wird.

## Claims

1. A process for preparing copolymers which form clear aqueous solutions from
A) 45 to 90 % by weight N-vinylpyrrolidone,
B) 10 to 55 % by weight of a vinyl ester and
C) 0 to 10 % by weight of other copolymerizable monomers
by radical polymerization in an organic solvent in the presence of a radical initiator, and removal of the organic solvent and other volatiles by distillation, which comprises allowing the polymerization to proceed until the N-vinylpyrrolidone content in the reaction mixture is from 5 to 1 % by weight of N-vinylpyrrolidone amount employed, substantially removing the organic solvent and other volatiles by distillation, adding water to the mixture, again adding a radical initiator and leaving the aqueous solution at from 50 to 100°C for from 1 to 10 hours, and then removing volatile organic constituents virtually completely by a steam distillation.

2. A process for preparing copolymers which form clear aqueous solutions as claimed in claim 1, wherein the radical initiator is added continuously during the reaction.

3. A process for preparing copolymers which form clear aqueous solutions as claimed in claim 1 or 2, wherein an alkanol with 1 to 4 carbon atoms is used as organic solvent.

4. A process as claimed in any of claims 1 to 3, which is used for preparing copolymers for which vinyl acetate is employed as component B.

## Revendications

1. Procédé de préparation de copolymères transparents dans l'eau à partir de
A) 45 à 90% en poids de N-vinylpyrrolidone,
B) 10 à 55% en poids d'un ester vinylique et
C) 0 à 10% en poids d'autres monomères copolymérisables, par polymérisation radicalaire dans un solvant organique, en présence d'un initiateur radicalaire, et séparation du solvant organique et d'autres constituants volatils par distillation, caractérisé en ce qu'on mène la polymerisation jusqu'à une teneur du mélange reactionnel en N-vinylpyrrolidone qui correspond à 5-1% en poids de la quantité de N-vinyl pyrrolidone mise en réaction, on sépare dans une large mesure le solvant organique et les autres constituants volatils par distillation, on additionne d'eau le mélange, on abandonne la solution aqueuse pendant 1 à 10 h à 50-100°C en ajoutant de nouveau de l'initiateur radicalaire, puis on élimine de façon pratiquement complète les constituants organiques volatils par un entrainement à la vapeur.

2. Procédé de preparation de copolymères transparents dans l'eau selon la revendication 1, caractérisé en ce qu'on ajoute l'initiateur radicalaire de façon continue pendant la réaction.

3. Procédé de préparation de copolymères transparents dans l'eau selon la revendication 1 ou 2, caractérisé en ce qu'on utilise, comme solvant organique, un alcanol à 1-4 atomes de carbone.

4. Procédé selon l'une quelconque des revendications 1 à 3, caractérisé en ce qu'on l'applique pour la préparation de copolymères dans lesquels on utilise de l'acétate de vinyle comme composant B.
